Europäisches Patentamt

**(19)** European Patent Office

Office européen des brevets

**(11)** Publication number : **0 180 975 B2**

**(12)** NEW EUROPEAN PATENT SPECIFICATION

**(45)** Date of publication of the new patent specification : **19.08.92 Bulletin 92/34**

**(51)** Int. Cl.⁵ : **C08F 20/44**

**(21)** Application number : **85114101.0**

**(22)** Date of filing : **06.11.85**

**(54)** Process for producing acrylonitrile polymer.

**(30)** Priority : **06.11.84 JP 233746/84**
**06.11.84 JP 233747/84**

**(43)** Date of publication of application :
**14.05.86 Bulletin 86/20**

**(45)** Publication of the grant of the patent :
**25.01.89 Bulletin 89/04**

**(45)** Mention of the opposition decision :
**19.08.92 Bulletin 92/34**

**(84)** Designated Contracting States :
**DE FR GB IT**

**(56)** References cited :
**EP-A- 0 044 534**
**DD-C- 58 388**
**DD-C- 69 926**
**US-A- 3 379 670**
**US-A- 3 697 492**

**(73)** Proprietor : **MITSUBISHI RAYON CO., LTD.**
**3-19, Kyobashi 2-chome Chuo-Ku**
**Tokyo 104 (JP)**

**(72)** Inventor : **Sugimori, Teruhiko**
**c/o Mitsubishi Rayon Co. Ltd. No. 20-1,**
**Miyuki-cho**
**Otake-shi Hiroshima (JP)**
Inventor : **Shiraishi, Yoshinobu**
**c/o Mitsubishi Rayon Co. Ltd. No. 20-1,**
**Miyuki-cho**
**Otake-shi Hiroshima (JP)**

**(74)** Representative : **Eitle, Werner, Dipl.-Ing. et al**
**Hoffmann, Eitle & Partner Patentanwälte**
**Arabellastrasse 4**
**W-8000 München 81 (DE)**

EP 0 180 975 B2

## Description

### Field of Invention

This invention relates to a process for producing a highly polymerized acrylonitrile polymer consisting mainly of an acrylonitrile unit which can be spun into a fibrous material by conventional wet spinning, dry jet wet spinning or dry spinning techniques. The resulting fibrous material is useful not only as a fiber for clothing, but also as a precursor for carbon fiber, as well as fabric for industrial filter media, tent cloth, sailcloth, sewing yarn, a reinforcing material for cement as a substitute for asbestos, a membraneous or hollow yarn filter medium used in a medical field, a gas barrier film, and the like.

### Background of the Invention

Conventional processes for industrially producing an acrylonitrile polymer include a precipitation polymerization process using a redox polymerization catalyst composed of a persulfate and an acid sulfite in an aqueous medium, a uniform solution polymerization process using a solvent, such as dimethyl sulfoxide, dimethylformamide, dimethylacetamide, ethylene carbonate, $\gamma$-butyrolactone, etc., an emulsion polymerization process, and the like. However, acrylonitrile polymers obtained by these conventional processes usually have a reduced viscosity of 2.0 or smaller, and fibers obtained therefrom usually have a strength of 5 g/d at most. This fiber strength, though sufficient as fibers for clothing, is a main cause accounting for the limitation of industrial application of acrylonitrile fibers to precursors for carbon fiber despite their excellent hydrolysis resistance, solvent resistance and weather resistance as compared with condensation fibers, such as polyesters and polyamides. Moreover, characteristics required for precursors of carbon fiber are increasingly being raised. Under these circumstances, it has been demanded to develop acrylonitrile polymer having improved characteristics. To this effect, a highly polymerized acrylonitrile may be a subject to study. However, a high degree of polymerization cannot be obtained in solution polymerization because a solvent used serves as a chain transfer agent. In suspension or emulsion polymerization, the resulting polymer may have a somewhat increased degree of polymerization but tends to be a branched polymer and thus have a markedly reduced solubility.

In order to overcome these problems, various attempts have hitherto been made. For example, there have been described for obtaining acrylonitrile polymers having an increased degree of polymerization a process which comprises polymerizing a polymerizable monomer mixture containing at least 80% by weight of acrylonitrile in a mixed medium composed of dimethyl sulfoxide and water as disclosed in Japanese Patent Publication No. 10996/61, a process which comprises polymerizing a monomer mixture containing from 20 to 80% by weight of acrylonitrile, from 20 to 80% by weight of at least one polymerizable unsaturated monomer that is more hydrophobic than acrylonitrile, and not more than 10% by weight of at least one acrylic or methacrylic sulfoalkyl ester or its salt in a mixed solvent composed of dimethyl sulfoxide and water at a weight ratio of from 63/35 to 85/15 at a monomer concentration of not more than 60% by weight as disclosed in Japanese Patent Publication No. 36430/73, and a process of using a mixture of dimethylacetamide and water at a weight ratio of from 95/5 to 75/25 as a polymerization medium as disclosed in published unexamined Japanese Patent Application No. 47088/77. However, the polymer obtained by any of these processes has a reduced viscosity of 2.0 or less, and, in addition, the viscosity of the polymerization system abnormally increases at a relatively low conversion, resulting in difficulty in stirring, which leads to problems on consideration of polymerization control and productivity.

Furthermore, it has been described that polymerization can be conducted using a reaction product between an alkali metal salt of a carboxylic acid and a trialkylaluminum to obtain a highly polymerized acrylonitrile polymer, as described in Japanese Patent Publication No. 26978/72. However, this process employs an anionic polymerization system wherein water cannot be used as a polymerization medium, and, therefore, encounters problems concerning the polymerization operation, the polymerization apparatus, and industrial production.

### Summary of the Invention

An object of this invention is to provide a process for stably producing an acrylonitrile polymer having a high degree of polymerization.

The above object can be accomplished by initiating polymerization of a mixed monomer composition containing a polymerizable monomer in a polymerization medium comprising a non-solvent and an organic solvent for an acrylonitrile polymer, and adding an additional amount of at least one of the non-solvent and the organic solvent to the polymerization system after the polymerization system becomes heterogeneous due to precipitation of polymer.

That is, the present invention relates to a process for stably producing a highly polymerized acrylonitrile polymer, which comprises initiating polymerization using a radical initiator of a mixed monomer composition comprising (a) from 10 to 70% by weight of a polymerizable unsaturated monomer mixture containing at least 70 mol% of acrylonitrile (b) from 15 to 60% by weight of an organic solvent and (c) from 15 to 60% by weight of a non-solvent, selected from the group consisting of water, an alcohol, a hydrocarbon, an amide, a ketone, an ether, and, after a polymer is precipitated to make the polymerization system heterogeneous, adding at least one of the organic solvent and the non-solvent to the system in an amount of from 1 to 10 parts by weight per part by weight of the polymerizable monomer mixture to continue polymerization.

The conventional proposals aiming at an increase in the degree of polymerization of an acrylonitrile polymer consist in inhibition of chain transfer to a solvent by adding water, an alcohol, or the like that is a non-solvent for an acrylonitrile polymer to a solution of polymerization system, and are, therefore, confined to solution polymerizations. In contrast, the process according to the present invention is characterized by performing the initial stage of polymerization in a heterogeneous system at a remarkably high rate of polymerization to form a highly polymerized polymer, and preventing the polymerization system from becoming solid by adding a polymerization medium to the system. Further, according to the present invention, the degree of polymerization can easily be controlled by varying the ratio of the non-solvent to the organic solvent. Furthermore, the present invention permits of use of an organic radical polymerization initiator that cannot be used in general aqueous system suspension polymerization. In other words, the present invention provides an entirely novel process for producing an acrylonitrile polymer taking full advantage of both the aqueous system precipitation polymerization and the solution polymerization.

Brief Description of the Accompanying Drawings

Figure 1 is a diagram showing possible compositions of a mixed monomer composition to be charged according to the present invention.

Figure 2 is a diagram showing possible compositions of a polymerization system after addition of a polymerization medium to a polymerization system when the present invention is carried out in a batch system.

Figure 3 is a diagram showing a composition of a polymerization system in a polymerization vessel or vessels succeeding a first polymerization vessel when the present invention is carried out in a continuous system.

Figure 4 is a schematic view of a two-vessel system continuous polymerization apparatus to be used in the most preferred embodiment of the present invention, wherein the numeral 1 indicates an opening, for adding material, of a first polymerization vessel 2; 3 indicates an opening for adding a polymerization medium to a second vessel 2; 5 indicates an overflow pipe; 6 indicates a condenser; 7 indicates a thermostat for the first vessel 2; and 8 indicates a thermostat for the second vessel 4.

Detailed Description of the Invention

The terminology "reduced viscosity" as herein used means a value ($\eta_{red}$) determined at 25°C in a 0.5 wt% dimethylformamide solution.

The polymerizable unsaturated monomer mixture which can be used in the present invention should contain at least 70 mol% acrylonitrile in order to meet chemical and physical requirements for fibrous or filmy materials obtained from the resulting acrylonitrile polymer.

Other polymerizable unsaturated monomers which can be copolymerized with acrylonitrile include methyl (meth)acrylate, ethyl (meth)acrylate, n-, iso- or t-butyl (meth)acrylate, 2-ethylhexyl (meth)acrylate, acrylic acid, methacrylic acid, itaconic acid, a-choloroacrylonitrile, 2-hydroxyethyl acrylonitrile, hydroxyalkyl (meth)acrylate, acrylamide, methacrylamide, vinyl chloride, vinylidene chloride, vinyl bromide, vinyl acetate, vinyl propionate, and the like. One or more of these comonomers can be used in a total amount up to 30 mol % based on the monomer mixture.

A polymerization medium to be used in the present invention comprises from 15 to 60% by weight of a non-solvent and from 15 to 60% by weight of an organic solvent, both based on the total amount of the above-described polymerizable unsaturated monomer mixture and the polymerization medium.

The organic solvent to be used may be any of those commonly employed as solvents for an acrylonitrile polymer, such as dimethylformamide, dimethylacetamide, dimethyl sulfoxide, ethylene carbonate, $\gamma$-butyrolactone, etc.

The non-solvent for an acrylonitrile polymer which can be used in the present invention includes water, an alcohol, a hydrocarbon, an amide, a ketone, an ether, etc., e.g. methyl alcohol, ethyl alcohol, octyl alcohol, hexane, heptane, octane, acetone, tetrahydrofuran, aniline, acetamide, etc.

Since the polymerization medium is a mixed solvent composed of an organic solvent and a non-solvent

3

for an acrylonitrile polymer as described above, a polymerization initiator to be used in the present invention can be selected from a broad range, only taking the solubility of the initiator into consideration, and any of generally used radical initiators. Examples of usable polymerization initiators include azo compounds, e.g., azobisisobutyronitrile, 2,2'-azobis (2,4-dimethylvaleronitrile), etc.; organic peroxides, e.g., aliphatic diacyl peroxides, peroxy esters, etc.; persulfates; and redox initiators composed of these peroxides and reducing agents. In particular, when the acrylonitrile polymer is required to be free from impurities, for example, in the production of a polymer for a precursor of carbon fiber, use of an organic radical initiator can provide a system free from impurities. this eliminates the necessity of a washing step that is absolutely required in the case of using a redox initiator. Accordingly, an organic polymerization initiator is perferred in carrying out the present invention from the viewpoint of economy.

As polymerization of the above-described polymerizable unsaturated monomer mixture proceeds in the above-described polymerization medium, a polymer produced is precipitated, and, in general, the whole system becomes solid. In extreme cases, stirring is impossible, and polymerization cannot proceed. A feature of the present invention resides in addition of a non-solvent for an acrylonitrile polymer, an organic solvant for an acrylontrile polymer, or a mixture thereof to the polymerization system in order to prevent the system from solidification to thereby making it possible to stably continue the polymerization at a high conversion.

The amounts of the non-solvent and the organic solvent to be added to this time can arbitrarily be selected, each from 0 to 100% by weight, respectively.

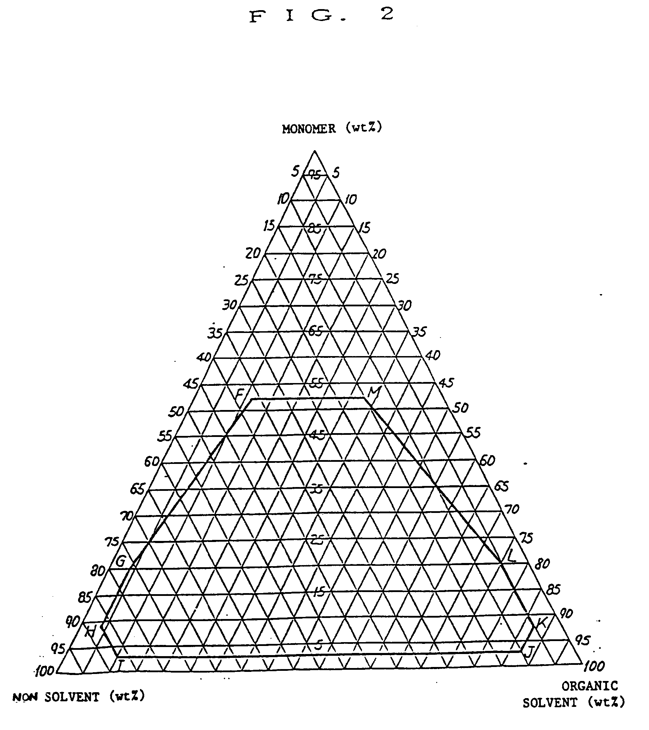

Figure 2 illustrates a composition diagram of the polymerization system after the addition of the polymerization medium in the case of carrying out the present invention in a batch system. The polymerization system can have a wide range of compositions by varying the composition of the polymerization medium to be added and the amount thereof. Further, the degree of polymerization and distribution thereof can be easily controlled by varying the composition of the polymerization medium to be added. For instance, when polymerization is initiated in a medium having a low ratio of an organic solvent to a non-solvent to produce a highly polymerized polymer in the initial stage and only the organic solvent is then added to the polymerization system to complete the polymerization, a polymer having a low degree of polymerization is produced in the latter stage of polymerization. As a result, a polymer having a wider distribution of polymerization degree can be produced as compared with the case where a polymerization medium is not added in the course of polymerization.

Therefore, a polymer having a desired polymerization degree or a desired distribution of polymerization degree can easily be produced by selecting an appropriate ratio of the organic solvent to the non-solvent of the poly-merization medium that is additionally supplied. The total amount of the polymerization medium to be additionally supplied generally ranges from 1 to 10 parts by weight, and more preferably from 2 to 8 parts by weight, per part by weight of the polymerizable unsaturated monomer mixture initially charged. If it is less than 1 part by weight, prevention of solidification of the polymerization system is difficult to achieve. On the other hand, if it exceeds 10 parts by weight, the polymer concentration in the resulting polymer slurry is reduced, which is unfavourable form the standpoint of productivity and economy.

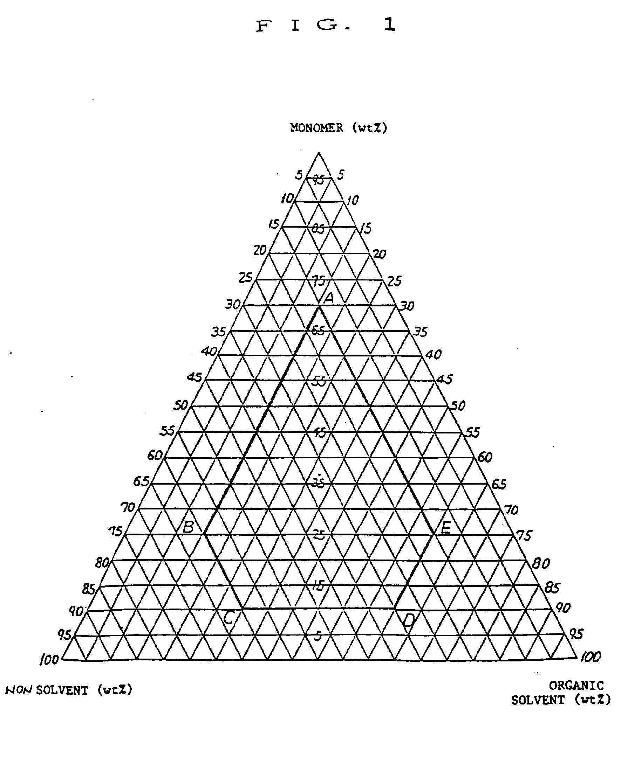

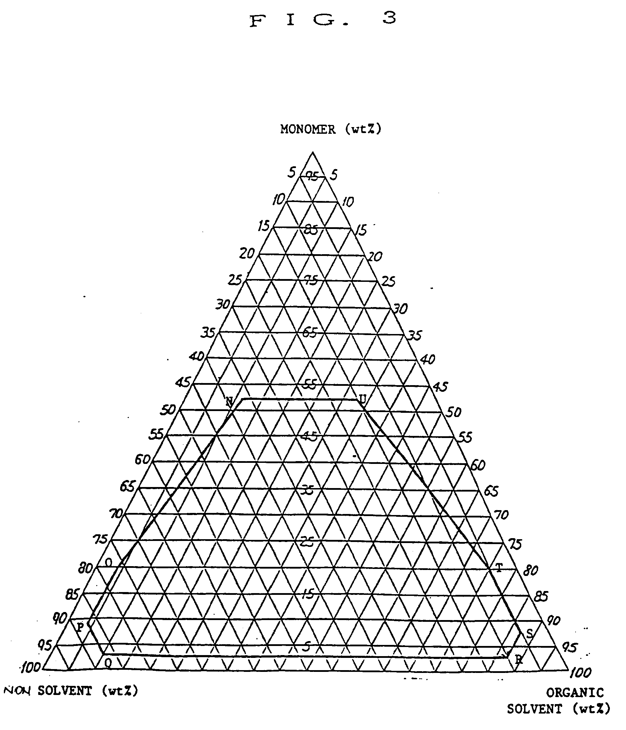

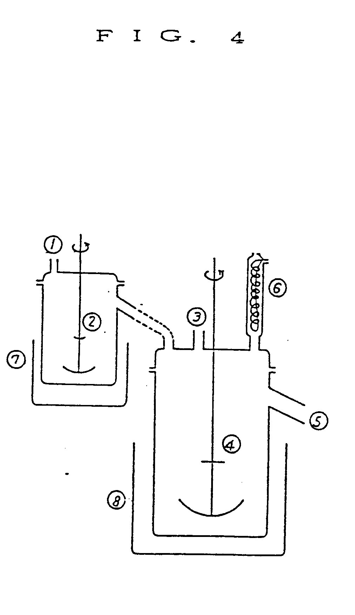

In carrying out the present invention in a continuous system, it is preferable to use an overflow type polymerization apparatus compound composed of two polymerization vessels as shown in Fig. 4. In this case, a mixed monomer composition having a composition surrounded by points A, B, C, D and E in Figure 1 is charged in a first polymerization vessel, and a radical polymerization initiator is then added thereto to initiate polymerization. When an acrylonitrile polymer is produced in the first polymerization vessel to form a white turbidity, a mixed monomer composition having a composition surrounded by points A, B, C, D, and E in Figure 1 is started to be fed to the first polymerization vessel at a fixed quantity, and the polymerization mixture in the first vessel is transferred to a second polymerization vessel by overflowing, wherein polymerization of the second polymerization system is started. If the polymerization in the second polymerization system is continued without changing the composition thereof, the second polymerization system undergoes solidification and handling thereof becomes very difficult. In order to avoid this, an organic solvent and/or a non-solvent for an acrylonitrile polymer is/are added to the second polymerization system simultaneously with the start of the transfer of the first polymerization system so that the composition of the second polymerization system may fall within the range surrounded by points N, O, P, Q, R, S, T, and U in Figure 3. Polymerization in the second vessel is then continued to produce an acrylonitrile polymer having a desired degree of polymerization.

Continuous polymerization according to the present invention may also be carried out by using 3 or more polymerization vessels. In such a case, the polymerization system in each of the vessels succeeding the first vessel should be so adjusted as to have a composition within the range surrounded by points N, O, P, Q, R, S, T, and U of Figure 3 by adding an organic solvent and/or a non-solvent. By controlling the amounts of the organic solvent and/or non-solvent to be added to every polymerization system succeeding the first one, an acrylonitrile polymer having a varied degree of polymerization can be obtained. For example, when polymerization is initiated in a polymerization medium having a low ratio of the organic solvent to the non-solvent to produce a highly polymerized polymer in the initial stage, and the polymerization is completed in the polymerization vessels succeeding the first vessel while feeding thereto a polymerization medium comprising solely an organic solvent, a polymer having a low polymerization degree is produced in these polymerization vessels. As a result, it is possible to produce a polymer having a broader distribution of polymerization degree as compared with a general polymerization process wherein a polymerization medium is not added in the course of polymerization. Therefore, in accordance with the present invention, when carried out in a continuous system, a polymer having a desired polymerization degree or a desired distribution of polymerization degree can be continuously and easily produced by selecting an appropriate ratio of the organic solvent to the non-solvent of the polymerization medium to be additionally fed.

As described above, the present invention can be applied to either a batchwise polymerization system using a single polymerization vessel or to a multi-stage continuous polymerization system in which a mixed monomer composition containing a monomer is continuously fed to a first polymerization vessel to initiate polymerization and a polymerization medium is additionally fed to each of the polymerization vessels other than the first vessel to continue the polymerization. In the latter continuous polymerization system, a polymerizable unsaturated monomer mixture may be fed not only to the first vessel, but also to the successive vessel or vessels in divided portions.

In view of productivity and economy, it is most preferred that polymerization is carried out in a continuous system using two polymerization vessels, in which a mixed monomer composition comprising a polymerizable unsaturated monomer or monomers, and a polymerization medium at a given ratio and an initiator are continuously fed to a first vessel to initiate polymerization, and the polymerization is stably continued to a high conversion in a second polymerization vessel while feeding the polymerization medium to the second vessel.

The present invention will now be illustrated in greater detail by reference to the following examples and comparative examples, but it should be understood that the present invention is not limited thereto. In these examples, all the parts, percents and ratios are by weight unless otherwise indicated.

Example 1

Into a 2 liter four-necked flask equipped with a stirrer, a thermometer, a reflux condenser and a pipe for introducing nitrogen, nitrogen gas was introduced for 10 minutes to replace the atmosphere with nitrogen. Subsequently, a composition shown below was charged therein, and polymerization was initiated at 55°C.

Composition:

| | |
|---|---|
| Acrylonitrile (hereinafter referred to as AN) | 300 g |
| Dimethylformamide (hereinafter referred to as DMF) | 450 g |
| Distilled water | 450 g |
| Azobisisobutyronitrile (hereinafter referred to as AIBN) | 6 g |

When polymerization was continued for 15 minutes under temperature control, white turbidity apeared in the polymerization system. At this point, 1,000 g of distilled water was added thereto. After the polymerization was further continued for additional 70 minutes, the polymerization was stopped, and the system was washed with water and dried, to provide a white polymer having a conversion of 72% and a reduced viscosity $\eta_{red}$ of 3.65.

Example 2

The same procedures as described in Example 1 were repeated, except for changing the conditions as shown in Table 1 below. The results obtained are also shown in Table 1 below.

TABLE 1

| Run No. | Composition Charged | | | | Polymerization Temperature (°C) | Kind and Amount of Solvent Added | Conversion (%) | $\eta_{red}$ |
| | AN (g) | DMF (g) | Distilled Water (g) | AIBN (wt%)** | | | | |
|---|---|---|---|---|---|---|---|---|
| 1 | 300 (25%)* | 450 (37.5%)* | 450 (37.5%)* | 1.0 | 55 | DMF 450 g (1.5 parts)*** | 72 | 2.30 |
| 2 | 240 (20%) | 480 (40%) | 480 (40%) | 2.0 | 60 | DMF 480 g Distilled water 480 g (4 parts in total) | 70 | 3.45 |
| 3 | 240 (20%) | 480 (40%) | 480 (40%) | 2.0 | 60 | Distilled water 480 g (2 parts) | 75 | 3.30 |
| 4 | 240 (20%) | 480 (40%) | 480 (40%) | 2.0 | 50 | Distilled water 480 g (2 parts) | 68 | 5.54 |
| 5 | 300 (25%) | 450 (37.5%) | 450 (37.5%) | 1.0 | 55 | DMF 450 g Distilled water 450 g (3 parts in total) | 69 | 4.46 |

Note:  * Values in the parentheses indicate percents by weight based on the total amount of AN, DMF and distilled water.
** Based on AN.
*** Values in the parentheses indicate parts by weight per part by weight of AN.

As shown in Table 1 above, a highly polymerized polymer having a reduced viscosity of 2.0 or higher can be obtained in each case.

Comparative Example 1

In a 2 liter four-necked flask equipped with a thermometer, a condenser, a stirrer and a pipe for introducing nitrogen, 1 liter of distilled water and 0.15 g of concentrated sulfuric acid were charged. Nitrogen gas was introduced thereto to remove dissolved air. Twenty minutes later, 200 g of acrylonitrile was fed to the flask with stirring while maintaining the temperature inside the flask at 50°C. Ten minutes later, a solution of 0.51 g of potassium persulfate in 25 ml of distilled water was added to the mixture, and subsequently a solution of 2.43 g of acid sodium sulfite in 25 ml of distilled water was slowly added thereto dropwise. Several minutes later, polyacrylonitrile began to precipitate. After the mixture was stirred at 50°C for about 4 hours, the raction mixture was allowed to cool to room temperature. The precipitated polymer was collected by filtration with suction, washed with water, dehydrated, and dried in a steam drier at 70°C for 2 days. The resulting polymer had a conversion of about 58% and a reduced viscosity $\eta_{red}$ of about 1.9.

The same procedures as above were repeated, except for changing the amount of potassium persulfate or acid sodium sulfite used as polymerization initiator or the ratio of these initiators in an attempt to produce a highly polymerized polymer. However, the resulting polymer had a reduced viscosity $\eta_{red}$ of about 2.0 at the highest, due to difficulty in obtaining a high conversion and in polymerization control.

Example 3

The same procedures as described in Example 1 were repeated, except for using a 50 litre polymerization vessel and increasing the amount of the composition charged (the ratio of the components being unchanged). There was obtained a polymer having a reduced viscosity of about 3.5 on an average of three batches.

In 22.2 kg of dimethylformamide was dispersed 7.8 kg of the above obtained polyacrylonitrile at -20°C, and the resulting slurry was uniformly dissolved by heating in a kneader equipped with a Z-type stirrer at 120°C for 20 minutes to prepare an about 26% spinning dope. The spinning dope was subjected to wet spinning using a coagulating bath comprising 78.5% DMF (15°C), followed by stretching to a stretch ratio of 6 in a known manner. The resulting fiber had a fineness of 1.3 d and a single fibre strength of 7.2 g/d.

Comparative Example 2

The polyacrylonitrile obtained in Comparative Example 1 was spun in the same manner as described in Example 3. The resulting polyacrylonitrile fiber showed a fineness of 1.3 d and a single fiber strength of 4.5 g/d.

Example 4

Polymerization was carried out using an overflow type continuous polymerization apparatus composed of two polymerization vessels as shown in Fig. 4 under conditions shown in Table 2 below.

EP 0 180 975 B2

## TABLE 2

| | Feed Rate (g/min) | Composition of Feed Material | DMF/Water | Composition of Polymerization System (%) |
|---|---|---|---|---|
| **First Vessel:** | | | | |
| Monomer Mixture | 2.34 | AN/methacrylic acid = 98.5/1.5 (by mole) | – | 25* |
| Organic Solvent | 4.68 | DMF | | 50* |
| Distilled Water | 2.34 | – | 66/34 | 25* |
| Initiator | | AIBN (DMF/AIBN = 200/1; monomer mixture/AIBN = 100/1) | – | – |
| **Second Vessel:** | | | | |
| Solvent | 8.19 | Distilled water (= 3.5 parts per part of monomer mixture) | 31/69 | monomer mixture/ polymerization medium = 1/6.5 |

Note:  *  Based on the total amount of monomer mixture, organic solvent and distilled water.

|  | Capacity | Material | Inner Temperature |
|---|---|---|---|
| First Vessel | 1 liter | glass | 55°C |
| Second Vessel | 5 liters | " | 60°C |
| Overall Retention Time: | 7 hours | | |

The results obtained are shown in Table 3 below.

TABLE 3

| Polymerization Time (hr) | 11 | 19 | 23 | 27 | 31 | 35 | 39 | 43 | 47 | 51 | 55 | 59 | 63 |
|---|---|---|---|---|---|---|---|---|---|---|---|---|---|
| Conversion (%) | 52 | 65 | 63 | 67 | 65 | 68 | 69 | 64 | 66 | 60 | 64 | 68 | 62 |
| $\eta_{red}$ | 3.02 | 3.15 | 2.60 | 2.49 | 2.41 | 2.57 | 2.44 | 2.32 | 2.35 | 2.20 | 2.30 | 2.20 | 2.22 |

EP 0 180 975 B2

It can be seen from Table 3 that a polymer obtained in the initial stage has a slightly higher degree of polymerization and that a highly polymerized polymer having an average reduced viscosity of about 2.3 can be obtained at a high conversion.

Example 5

Polymerization was carried out in the same manner as described in Example 4, except for changing the ratio of DMF to distilled water as shown in Table 4. The results obtained are shown in Table 4 below. In Table 4, the reduced viscosity $\eta_{red}$ is an average of the system in a stabilized stage excluding the initial stage.

### TABLE 4

| Run No. | DMF/Distilled Water | $\eta_{red}$ |
|---|---|---|
| 1 | 25/75 | 4.66 |
| 2 | 50/50 | 3.80 |
| 3 | 75/25 | 2.66 |
| 4 | 80/20 | 2.00 |

As is apparent from the results of Table 4, the degree of polymerization can easily be varied simply by changing the ratio of the organic solvent to the non-solvent (water).

Example 6

Polymerization was carried out in a continuous system in the same manner as described in Example 4, except using polymerization vessels each having a capacity 10 times that used in Example 4 and accordingly increasing the feed rates 10 times. The resulting polymer had a reduced viscosity of 2.40.

In 22.2 kg of dimethylformamide was dispersed 7.8 kg of the above obtained polymer at -20°C, and the resulting slurry was uniformly dissolved by heating in a kneader equipped with a Z-type stirrer at 120°C for 20 minutes to prepare an about 26% spinning dope. The spinning dope was subjected to wet spinning using a coagulating bath comprising 78.5% DMF at 15°C, followed by stretching to a stretch ratio of 6 in a known manner. The resulting polyacrylonitrile fiber had a fineness of 1.3 d and a strength of 6.7 g/d.

As described above, according to the present invention, a highly polymerized acrylonitrile polymer having a reduced viscosity of 2 or more, particularly 2.5 or more, can easily be obtained. Further, since the present invention permits of use of an organic polymerization initiator, such as azobisisobutyronitrile, the polymerization system may simply comprise a monomer or monomers, an organic solvent, water, and an initiator, and is, therefore, freed from the necessity of a washing step, thus bringing about an economical advantage. Furthermore, since the polymer produced in the present invention exhibits higher solubility in solvents as compared with those obtained by the conventional processes, it can be spun into fiber having a high Young's modulus without employing any special spinning process. Fibers having a high Young's modulus possess a much increased strength over that of the conventional fibers having a lower Young's modulus, and, therefore, can be stretched at a fairly high stretch ratio in, for example, flameproofing and pre-carbonization to produce carbon fiber having a high strength and an elongation of 1.7% or more. The fiber obtained from the polymer according to the present invention is also very useful as sailcloth. In addition, when it is used as a reinforcing material for cement, a cured material exhibiting high bending strength can be obtained because of its excellent alkali resistance.

## Claims

1. A process for producing an acrylonitrile polymer having a reduced viscosity of 2 or more comprising initiating polymerization using a radical initiator of a mixture comprising

(a) from 10 to 70% by weight of a polymerizable unsaturated monomer mixture containing at least 70 mol% acrylonitrile,

(b) from 15 to 60% by weight of an organic solvent for an acrylonitrile polymer, and

(c) from 15 to 60% by weight of a non-solvent for an acrylonitrile polymer selected from the group consisting of water, an alcohol, a hydrocarbon, an amide, a ketone, an ether,

and, after a polymer is precipitated, adding at least one of said organic solvent and said non-solvent to the polymerization system in a total amount of from 1 to 10 parts by weight per part by weight of the charged polymerizable unsaturated monomer mixture to continue polymerization.

2. A process as in claim 1, wherein said organic solvent for the acrylonitrile polymer is dimethylformamide, dimethylacetamide, dimethyl sulfoxide, ethylene carbonate, or $\gamma$-butyrolactone.

3. A process as in claim 1, wherein said non solvent for the acrylonitrile polymer is water.

4. A process as in claim 2, wherein said non solvent for the acrylonitrile polymer is water.

5. A process as in claim 1, wherein said radical initiator is an azo compound or a peroxide.

6. A process as in claim 1, wherein the addition of at least one of said organic solvent and said non solvent to the polymerization system is made in a total amount of from 2 to 8 parts by weight per part by weight of the charged polymerizable unsaturated monomer mixture.

7. A process as in claim 4, wherein the addition of at least one of said organic solvent and said non solvent to the polymerization system is made in a total amount of from 2 to 8 parts by weight per part by weight of the charged polymerizable unsaturated monomer mixture.

8. A process as in claim 1, wherein the polymerization is carried out in a multi-stage continuous polymerization apparatus composed of two or more polymerization vessels, in which polymerization is initiated in a first vessel, and, when a given degree of polymerization is reached in the first vessel, the polymerization mixture in the first vessel is successively transferred to a polymerization vessel or vessels succeeding the first vessel adding at least one of said organic solvent and said non solvent to the polymerization vessel or vessels succeeding the first vessel, in a total amount per vessel of from 1 to 10 parts by weight per part by weight of the charged polymerizable unsaturated monomer mixture to continue polymerization.

9. A process as in claim 8, wherein said organic solvent for the acrylonitrile polymer is dimethylformamide, dimethylacetamide, dimethyl sulfoxide, ethylene carbonate, or $\gamma$-butyrolactone.

10. A process as in claim 8, wherein said non solvent for the acrylonitrile polymer is water.

11. A process as in claim 9, wherein said non solvent for the acrylonitrile polymer is water.

12. A process as in claim 8, wherein said radical initiator is an azo compound or a peroxide.

13. A process as in claim 8, wherein the addition of at least one of said organic solvent and said non solvent to the polymerization system is made in a total amount of from 2 to 8 parts by weight per part by weight of the charged polymerizable unsaturated monomer mixture.

14. A process as in claim 11, wherein the addition of at least one of said organic solvent and said non solvent to the polymerization system is made in a total amount of from 2 to 8 parts by weight per part by weight of the charged polymerizable unsaturated monomer mixture.

15. A process as in claim 9, wherein the addition of at least one of said organic solvent and said non solvent to the polymerization system is made in a total amount of from 2 to 8 parts by weight per part by weight of the charged polymerizable unsaturated monomer mixture.

## Patentansprüche

1. Verfahren zum Herstellen eines Acrylnitrilpolymeren mit einer Viskositätszahl von 2 oder mehr, umfassend unter Verwendung eines Radikalinitiators Initiieren der Polymerisation einer Mischung, umfassend

(a) 10 bis 70 Gew.% einer polymerisierbaren ungesättigten Monomermischung, welche mindestens 70 Mol-% Acrylnitril enthält,

(b) 15 bis 60 Gew.% eines organischen Lösungsmittels für ein Acrylnitrilpolymer, und

(c) 15 bis 60 Gew.% eines inaktiven Lösungsmittels für ein Acrylnitrilpolymer, ausgewählt aus der Gruppe aus Wasser, einem Alkohol, einem Kohlenwasserstoff, einem Amid, einem Keton, einem Ether, und, nachdem ein polymer gefällt ist,

Hinzugeben mindestens eines Lösungsmittels aus der Gruppe aus dem organischen Lösungsmittel und dem inaktiven Lösungsmittel zu dem Polymerisationssystem in einer Gesamtmenge von 1 bis 10 Gew.-Teilen pro Gew.-Teil der eingesetzten polymerisierbaren, ungesättigten Monomermischung unter Fortführung der Polymerisation.

2. Verfahren nach Anspruch 1, bei dem das organische Lösungsmittel für das Acrylnitrilpolymer Dimethylformamid, Dimethylacetamid, Dimethylsulfoxid, Ethylencarbonat oder gamma-Butyrolacton ist.

3. Verfahren nach Anspruch 1, bei dem das inaktive Lösungsmittel für das Acrylnitrilpolymer Wasser ist

4. Verfahren nach Anspruch 2, bei dem das inaktive Lösunasmittel für das Acrylnitrilpolymer Wasser ist.

5. Verfahren nach Anspruch 1, bei dem der Radikalinitiator eine Azoverbindung oder ein Peroxid ist.

6. Verfahren nach Anspruch 1, bei dem die Hinzugabe mindestens eines Lösungsmittels aus der Gruppe aus dem organischen Lösungsmittel und dem inaktiven Lösungsmittel zu dem Polymerisationssystem in einer Gesamtmenge von 2 bis 8 Gew.-Teilen pro Gew.-Teil der eingesetzten polymerisierbaren, ungesättigten Monomermischung durchgeführt wird.

7. Verfahren nach Anspruch 4, bei dem die Hinzugabe mindestens eines Lösungsmittels aus der Gruppe aus dem organischen Lösungsmittel und dem inaktiven Lösungsmittel zu dem Polymerisationssystem in einer Gesamtmenge von 2 bis 8 Gew.-Teilen pro Gew.-Teil der eingesetzten polymerisierbaren, ungesättigten Monomermischung durchgeführt wird.

8. Verfahren nach Anspruch 1, bei dem die Polymerisation in einer mehrstufigen Vorrichtung für kontinuierliche Polymerisation, zusammengesetzt aus zwei oder mehreren Polymerisationsgefässen, durchgeführt wird, wobei die Polymerisation in einem ersten Gefäss initiiert wird, und bei Erreichung eines bestimmten Polymerisationsgrades in dem ersten Gefäss die Polymerisationsmischung in dem ersten Gefäss aufeinanderfolgend in ein Polymerisationsgefäss oder -gefässe, die sich an das erste Gefäss anschliessen, übertragen wird unter Hinzugabe mindestens eines Lösungsmittels aus der Gruppe aus dem organischen Lösungsmittel und dem inaktiven Lösungsmittel zu dem Polymerisationsgefäss oder -gefässen, die sich an das erste Gefäss anschliessen, in einer Gesamtmenge pro Gefäss von 1 bis 10 Gew.-Teilen pro Gew.-Teil der eingesetzten polymerisierbaren, ungesättigten Monomermischung unter Fortführung der Polymerisation.

9. Verfahren nach Anspruch 8, bei dem das organische Lösungsmittel für das Acrylnitrilpolymer Dimethylformamid, Dimethylacetamid, Dimethylsulfoxid, Ethylencarbonat oder gamma-Butyrolacton ist.

10. Verfahren nach Anspruch 8, bei dem das inaktive Lösungsmittel für das Acrylnitrilpolymer Wasser ist.

11. Verfahren nach Anspruch 9, bei dem das inaktive Lösungsmittel für das Acrylnitrilpolymer Wasser ist.

12. Verfahren nach Anspruch 8, bei dem der Radikalinitiator eine Azoverbindung oder ein Peroxid ist.

13. Verfahren nach Anspruch 8, bei dem die Zugabe mindestens eines Lösungsmittels aus der Gruppe aus dem organischen Lösungsmittel und dem inaktiven Lösungsmittel zu dem Polymerisationssystem in einer Gesamtmenge von 2 bis 8 Gew.-Teilen pro Gew.-Teil der eingesetzten polymerisierbaren, ungesättigten Monomermischung durchgeführt wird.

14. Verfahren nach Anspruch 11, bei dem die Hinzugabe mindestens eines Lösungsmittels aus der Gruppe aus dem organischen Lösungsmittel und dem inaktiven Lösungsmittel zu dem Polymerisationssystem in einer Gesamtmenge von 2 bis 8 Gew.-Teilen pro Gew.-Teil der eingesetzten polymerisierbaren, ungesättigten Monomermischung durchgeführt wird.

15. Verfahren nach Anspruch 9, bei dem die Hinzugabe mindestens eines Lösungsmittels aus der Gruppe aus dem organischen Lösungsmittel und dem inaktiven Lösungsmittel zu dem Polymerisationssystem in einer Gesamtmenge von 2 bis 8 Gew.-Teilen pro Gew.-Teil der eingesetzten polymerisierbaren, ungesättigten Monomermischung durchgeführt wird.

## Revendications

1. Procédé pour fabriquer un polymère d'acrylonitrile ayant une viscosité réduite de 2 ou plus comprenant le déclenchement au moyen d'un inducteur radicalaire de la polymérisation d'un mélange comprenant
   (a) de 10 à 70 % en poids d'un mélange de monomères insaturés polymérisables contenant au moins 70 mol% d'acrylonitrile,
   (b) de 15 à 60 % en poids d'un solvant organique d'un polymère d'acrylonitrile et
   (c) de 15 à 60 % en poids d'un non-solvant d'un polymère d'acrylonitrile choisi dans le groupe formé par l'eau, un alcool, un hydrocarbure, un amide, une cétone, un éther, et, après précipitation du polymère, l'addition au système de polymérisation dudit solvant organique et/ou dudit non-solvant en quantité totale de 1 à 10 parties en poids par partie en poids du mélange de monomères insaturés polymérisables chargé pour continuer la polymérisation.

2. Procédé selon la revendication 1, dans lequel ledit solvant organique du polymère d'acrylonitrile est le diméthylformamide, le diméthylacétamide, le diméthylsulfoxyde, le carbonate d'éthylène ou la $\gamma$-butyrolactone.

3. Procédé selon la revendication 1, dans lequel ledit non-solvant du polymère d'acrylonitrile est l'eau.

4. Procédé selon la revendication 2, dans lequel ledit non-solvant du polymère d'acrylonitrile est l'eau.

5. Procédé selon la revendication 1, dans lequel ledit inducteur radicalaire est un composé azoïque ou un peroxyde.

6. Procédé selon la revendication 1, dans lequel l'addition dudit solvant organique et/ou dudit non-solvant au système de polymérisation est effectuée en quantité totale de 2 à 8 parties en poids par partie en poids du mélange de monomères insaturés polymérisables chargé.

7. Procédé selon la revendication 4, dans lequel l'addition dudit solvant organique et/ou dudit non-solvant au système de polymérisation est effectuée en quantité totale de 2 à 8 parties en poids par partie en poids du mélange de monomères insaturés polymérisables chargé.

8. Procédé selon la revendication 1, dans lequel la polymérisation est mise en oeuvre dans un appareil de polymérisation continue multi-étages composé de deux ou plusieurs récipients de polymérisation, dans lequel la polymérisation est déclenchée dans le premier récipient et, lorsqu'un certain degré de polymérisation est atteint dans le premier récipient, le mélange de polymérisation dans le premier récipient est transféré successivement à un ou des récipients de polymérisation à la suite du premier récipient en ajoutant ledit solvant organique et/ou ledit non-solvant dans le ou les récipients de polymérisation placés à la suite du premier récipient, en quantité totale par récipient de 1 à 10 parties en poids par partie en poids du mélange de monomères insaturés polymérisables chargé pour continuer la polymérisation.

9. Procédé selon la revendication 8, dans lequel ledit solvant organique du polymère d'acrylonitrile est le diméthylformamide, le diméthylacétamide, le diméthylsulfoxyde, le carbonate d'éthylène ou la γ-butyrolactone.

10. Procédé selon la revendication 8, dans lequel ledit non-solvant du polymère d'acrylonitrile est l'eau.

11. Procédé selon la revendication 9, dans lequel ledit non-solvant du polymère d'acrylonitrile est l'eau.

12. Procédé selon la revendication 8, dans lequel ledit inducteur radicalaire est un composé azoïque ou un peroxyde.

13. Procédé selon la revendication 8, dans lequel l'addition dudit solvant organique et/ou dudit non-solvant au système de polymérisation est effectuée en quantité totale de 2 à 8 parties en poids par partie en poids du mélange de monomères insaturés polymérisables chargé.

14. Procédé selon la revendication 11, dans lequel l'addition dudit solvant organique et/ou dudit non-solvant au système de polymérisation est effectuée en quantité totale de 2 à 8 parties en poids par partie en poids du mélange de monomères insaturés polymérisables chargé.

15. Procédé selon la revendication 9, dans lequel l'addition dudit solvant organique et/ou dudit non-solvant au système de polymérisation est effectuée en quantité totale de 2 à 8 parties en poids par partie en poids du mélange de monomères insaturés polymérisables chargé.

F I G . 1

F I G. 2

# F I G. 3

F I G . 4